# EUROPÄISCHE PATENTANMELDUNG

(11) **EP 1 593 882 A2**
(43) Veröffentlichungstag der Anmeldung: **09.11.2005**
(21) Anmeldenummer: 05009427.5
(22) Anmeldetag: 29.04.2005
(51) Int. Cl.: F16H 63/30

(54) **Verfahren zur Bearbeitung einer Schaltwelle für ein Schaltgetriebe**

(30) Priorität: 07.05.2004 DE 102004023232
(71) Anmelder: Kirschdorf, Dieter, 46282 Dorsten (DE)
(72) Erfinder: Kirschdorf, Dieter, 46282 Dorsten (DE)
(74) Vertreter: Linnemann, Winfried

(57) **Zusammenfassung**

Das Bearbeiten der Schaltwelle (1) zur Bildung des/jedes Oberflächenbereichs (10) mit möglichst glatter Oberfläche erfolgt durch mindestens einen Walz- oder Rollvorgang oder umfaßt mindestens einen Walz- oder Rollvorgang.

Damit wird bei der Bearbeitung der Schaltwelle eine glattere Oberfläche erzielt, was zu einer besseren Dichtigkeit und zu einem exakteren mechanischen Zusammenspiel zwischen der Schaltwelle und damit zusammenwirkenden weiteren Getriebeelementen führt.

## Beschreibung

Die vorliegende Erfindung betrifft ein Verfahren zur Bearbeitung einer Schaltwelle für ein Schaltgetriebe, insbesondere eines Kraftfahrzeuges, wobei die Schaltwelle in mindestens einem Oberflächenbereich zur Bildung eines Dicht- oder Verbindungsbereichs mit möglichst glatter Oberfläche bearbeitet wird.

Die Schaltwelle eines Schaltgetriebes verbindet einen Schalthebel, der von einer Bedienungsperson betätigt wird, mit den beweglichen Elementen im Inneren eines Getriebes, um dort unterschiedliche Getriebeübersetzungen einzustellen. Dabei verläuft die Schaltwelle durch einen Teil des Getriebegehäuses, das in seinem Inneren mit Schmieröl gefüllt ist. Im Inneren des Getriebes steht die Schaltwelle in Verbindung mit einer Rastierhülse. Sowohl für den Bereich der Durchführung der Schaltwelle durch das Getriebegehäuse als auch für den Bereich der Verbindung mit der Rastierhülse ist es wichtig, daß die Schaltwelle exakte Maße und eine möglichst glatte Oberfläche aufweist, um das gewünschte Zusammenwirken, insbesondere eine gute Dichtigkeit gegen einen Ölaustritt und ein geringes Spiel in der Schaltungsbetätigung, zu gewährleisten.

Bisher ist es in der einschlägigen Praxis üblich, die Schaltwelle in den genannten Bereichen durch Feindrehen und/oder Schleifen zu bearbeiten. Nachteilig verbleibt aber bei diesen Bearbeitungsverfahren noch eine relativ rauhe Oberfläche der Schaltwelle, so daß die Dichtigkeit zwischen Schaltwelle und ölgefülltem Getriebegehäuse begrenzt bleibt. Zudem treten auch gewisse Maßtoleranzen auf, die das Zusammenwirken der einzelnen beweglichen Teile des Getriebes und seiner Betätigungselemente nachteilig beeinflussen können.

Aus der DE 101 44 979 A1 ist ein Verfahren zur Herstellung einer Schaltwelle bekannt, deren Oberfläche zur Erzeugung von Korrosions- und Verschleißschutzschichten behandelt wird, wobei die Schaltwelle aus wenigstens zwei Bauteilen aus unterschiedlichen Werkstoffen zusammengesetzt wird. Bevorzugt werden dabei die Bauteile axial hintereinander miteinander verbunden, z.B. durch Form-und/oder Kraftschluß und anschließende Verschweißung. Zudem erfolgt bevorzugt noch eine Oberflächenbehandlung durch Nitrieren. Das Verfahren ist ersichtlich sehr aufwendig und behebt zudem nicht alle vorstehend angegebenen Nachteile; insbesondere wird keine Verminderung der Oberflächenrauhigkeit erreicht. Außerdem stellt jede Verbindungsstelle in der Schaltwelle immer eine Schwachstelle und damit potentielle Schadensquelle dar.

Für die vorliegende Erfindung stellt sich deshalb die Aufgabe, ein Verfahren zur Bearbeitung einer Schaltwelle für ein Schaltgetriebe anzuwenden, mit dem die vorstehend dargelegten Nachteile vermieden werden und mit dem eine Schaltwelle so herstellbar ist, daß die Dichtigkeit von Dichtstellen zwischen der Schaltwelle und anderen Getriebeteilen, wie das Getriebegehäuse, verbessert ist und/oder daß das mechanische Zusammenwirken der Schaltwelle mit anderen beweglichen Teilen des Getriebes verbessert ist.

Die Lösung dieser Aufgabe gelingt erfindungsgemäß mit einem Verfahren der eingangs genannten Art, das dadurch gekennzeichnet ist, daß das Bearbeiten zur Bildung des/jedes Oberflächenbereichs mit möglichst glatter Oberfläche durch mindestens einen Walz- oder Rollvorgang erfolgt oder mindestens einen Walz- oder Rollvorgang umfaßt.

Mit dem erfindungsgemäßen Verfahren wird bei der Bearbeitung der Schaltwelle in deren dafür vorgesehenen Oberflächenbereichen eine glattere Oberfläche erzielt, als dies mittels Feindrehen und/oder Schleifen möglich ist. Die beim Feindrehen und Schleifen zwangsläufig verbleibenden, wenn auch feinen Rillen oder Riefen auf der Oberfläche der Schaltwelle werden durch das Bearbeiten mittels eines Walz- oder Rollvorganges grundsätzlich vermieden oder beseitigt. Die mit dem erfindungsgemäßen Verfahren erreichbare glattere Oberfläche führt zu einer besseren Dichtigkeit zwischen der Schaltwelle und damit zusammenwirkenden weiteren Elementen, insbesondere Dichtringen, was einen Ölverlust aus dem Getriebe und eine Verschmutzung der Umwelt durch Getriebeöl wesentlich verringert oder sogar ganz ausschließt. Auch ein Verschleiß der Dichtung, die mit der Schaltwelle zusammenwirkt, durch Relativbewegungen zwischen diesen Teilen wird vermindert oder vermieden, weil die sehr glatte Oberfläche der Schaltwelle einen im Stand der Technik aufgrund der Rauhigkeit der Oberfläche zu beobachtenden Verschleiß ausschließt. Außerdem wird so das Spiel zwischen der Schaltwelle auf der einen Seite und damit zusammenwirkenden Elementen des Getriebes auf der anderen Seite vermindert, was eine exaktere Schaltung erlaubt.

In vorteilhafter Ausgestaltung des erfindungsgemäßen Verfahrens ist weiter vorgesehen, daß durch den Walz- oder Rollvorgang die Oberfläche der Schaltwelle in dem/jedem Oberflächenbereich nachbearbeitungsfrei auf einen eng tolerierten vorgebbaren Durchmesser gebracht und gleichzeitig verfestigt wird. In dieser Ausgestaltung des Verfahrens wird neben der besonders glatten Oberfläche auch eine besonders exakte Maßhaltigkeit der Schaltwelle in dem erfindungsgemäß bearbeiteten Bereich ihrer Oberfläche in Verbindung mit einer Verfestigung der Oberfläche erzielt. Die Verfestigung der Oberfläche sorgt für eine Verminderung des dort entstehenden Verschleißes im Betrieb, so daß auch über längere Einsatzzeiten der Schaltwelle eine gleichbleibend gute Dichtigkeit im Zusammenwirken mit einem oder mehreren Dichtringen gewährleistet bleibt.

Weiter ist erfindungsgemäß vorgesehen, daß in dem/jedem Oberflächenbereich der Schaltwelle der Außenumfang der Schaltwelle gewalzt oder gerollt wird. Das Walzen oder Rollen des Außenumfangs der Schaltwelle wird dann angewendet, wenn ein oder mehrere weitere Elemente eines Getriebes oder seiner Betätigungsmittel mit dem Außenumfang der Schaltwelle zusammenwirken, wie dies z. B. bei Dichtringen der Fall ist.

Eine weitere oder alternative Ausführung des Verfahrens sieht vor, daß in dem/jedem Oberflächenbereich der Schaltwelle der Innenumfang der Schaltwelle gewalzt oder gerollt wird. Diese Ausgestaltung des Verfahrens wird dann angewendet, wenn die Schaltwelle hohl ist oder mindestens einen hohlen Endabschnitt aufweist und wenn im Bereich eines solchen hohlen Abschnitts die Schaltwelle mit weiteren Teilen des Getriebes mit exakter Passung zusammenwirkt.

Wenn angestrebt wird, die technischen Mittel für die Ausführung des erfindungsgemäßen Verfahrens möglichst einfach zu halten, wird bevorzugt der Walz- oder Rollvorgang mit einer einzigen Walze oder Rolle durchgeführt.

Alternativ kann der Walz- oder Rollvorgang mit mehreren Walzen oder Rollen durchgeführt werden, wobei zwar die Vorrichtung zur Durchführung des Verfahrens aufwendiger wird, aber auch eine höhere Produktivität erreicht.

Eine erste Weiterbildung schlägt dabei vor, daß die mehreren Walzen oder Rollen nacheinander zum Einsatz gebracht werden. In dieser Ausgestaltung des Verfahrens kann beispielsweise eine zunächst noch rauhe Oberfläche nach und nach immer glatter gemacht werden, bis am Ende die gewünschte Glätte der Oberfläche erreicht ist. Da hierbei das Glätten der Oberflächen in mehreren Schritten erfolgt, wird jede Überbeanspruchung des Materials der Schaltwelle während des Walzens oder Rollens sicher vermieden.

Falls eine besonders schnelle Bearbeitung im Rahmen des Verfahrens gewünscht wird, können die mehreren Walzen oder Rollen alternativ auch gleichzeitig zum Einsatz gebracht werden.

Dabei besteht selbstverständlich auch die Möglichkeit, daß mehrere Walzgruppen aus jeweils mehreren Walzen nacheinander angewendet werden, um zugleich eine schnelle und in mehreren Schritten erfolgende Oberflächenbearbeitung vorzunehmen. Im diesem Falle können auch dann größere Umformraten erzielt werden, wenn zwischen dem Rohling der Schaltwelle und der fertigen Schaltwelle noch relativ große Maßunterschiede bestehen.

Wenn nur kleinere Maßänderungen bei der Bearbeitung erforderlich sind, wird mit der/jeder Walze oder Rolle ein einziger Walz- oder Rollenüberlauf über den/jeden Oberflächenbereich der Schaltwelle durchgeführt.

Für Fälle, in denen größere Umformungen erforderlich sind, können mit der/jeder Walze oder Rolle alternativ auch mehrere Walzen- oder Rollenüberläufe über/jeden Oberflächenbereich der Schaltwelle durchgeführt werden.

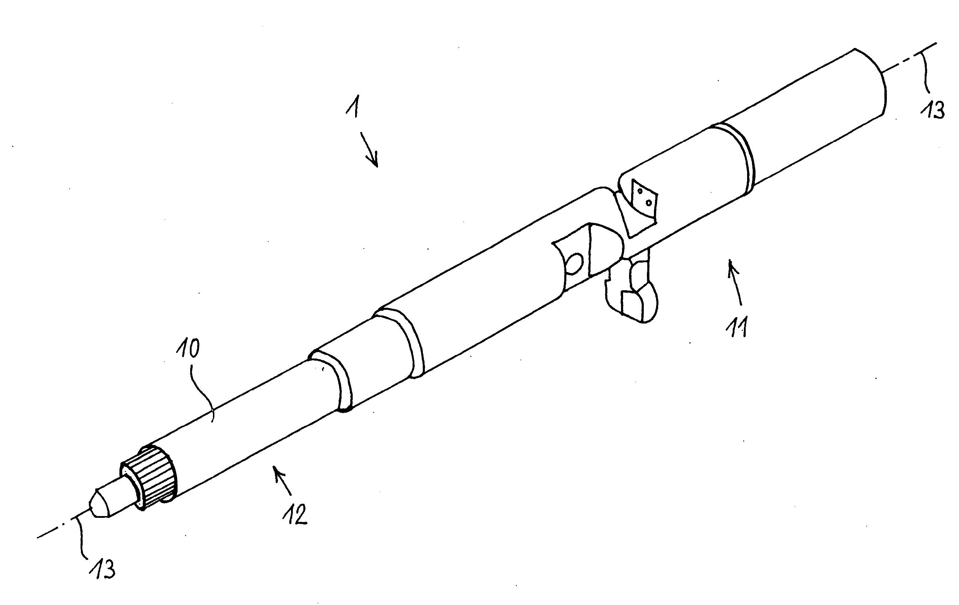

Nachfolgend wird anhand einer Zeichnung eine nach dem erfindungsgemäßen Verfahren bearbeitete Schaltwelle beispielhaft erläutert. Die einzige Figur der Zeichnung zeigt eine Schaltwelle in Ansicht.

Bei dem in der Zeichnung dargestellten Beispiel für eine Schaltwelle 1 umfaßt diese einen in der Zeichnung sich nach rechts erstreckenden Hauptteil 11 und einen sich nach links erstreckenden, kürzeren Kopfteil 12. Der Kopfteil 12 besitzt eine zylindrische Form und erstreckt sich konzentrisch zur Längsmittelachse 13 der Schaltwelle 1.

Im Bereich ihres Kopfteils 12 läuft die Schaltwelle 1 im zusammengebauten Zustand eines zugehörigen Schaltgetriebes, z. B. eines Kraftfahrzeuges, durch einen Schaltdekkel, der z. B. ein Teil eines Getriebegehäuses ist. Gegen einen Austritt von Schmieröl aus den Inneren des Getriebes nach außen ist in dem Schaltdeckel, der in der Zeichnung nicht dargestellt ist, eine Dichtung, vorzugsweise eine Lippendichtung, angeordnet, die mit einem Oberflächenbereich 10 des Kopfteils 12 der Schaltwelle 1 dichtend zusammenwirkt.

Die Schaltwelle 1 wird bei Betätigung der Gangschaltung des zugehörigen Getriebes sowohl in axialer Richtung, also parallel zu ihrer Längsmittelachse 13 verschoben, als auch um die Längsmittelachse 13 verdreht. Damit dabei eine gute und zuverlässige Abdichtung zwischen dem Oberflächenbereich 10 auf der einen Seite und der zuvor erwähnten Dichtung im Schaltdeckel auf der anderen Seite auch über lange Zeit gewährleistet bleibt, muß die Oberfläche im Oberflächenbereich 10 möglichst glatt und möglichst hart sein.

Zur Erzielung dieser Eigenschaften des Oberflächenbereichs 10 des Kopfteils 12 der Schaltwelle 1 wird diese zumindest in ihrem Oberflächenbereich 10 durch einen Walz- oder Rollvorgang an ihrer Oberfläche bearbeitet. Dieser Walz- oder Rollvorgang sorgt auf der einen Seite für eine Glättung der Oberfläche, nachdem diese zuvor durch Drehen und/oder Schleifen auf ein gewünschtes Grundmaß hinsichtlich ihres Durchmessers gebracht ist. Durch den Walz- oder Rollvorgang werden zunächst die Riefen und Rillen, die auch nach einem Feindrehen oder Schleifen noch im Oberflächenbereich verbleiben, eingeebnet und geglättet, so daß die gewünschte, besonders glatte Oberfläche im Oberflächenbereich 10 erreicht wird, die allein durch Feindrehen und/oder Schleifen nicht erreichbar wäre.

Zugleich sorgt der Walz- oder Rollvorgang dafür, daß eine Oberflächenhärtung des Materials der Schaltwelle 1 in dem Oberflächenbereich 10 erreicht wird. Diese Oberflächenhärtung ist vorteilhaft im Hinblick auf die gewünschte Erzielung einer besonders hohen Verschleißfestigkeit.

Die Schaltwelle 1 ist dabei ein einstückiges Bauteil und besteht aus einem einheitlichen Werkstoff, insbesondere einem geeigneten Stahl. In dem Bereich, in dem dies gewünscht oder erforderlich ist, erhält die Schaltwelle 1 durch den Walz- oder Rollvorgang die gewünschten, besonders günstigen Oberflächeneigenschaften hinsichtlich Glätte und Härte. In den Oberflächenbereichen, in denen die Schaltwelle diese besonderen Eigenschaften nicht benötigt, braucht der Walz- oder Rollvorgang nicht durchgeführt zu werden. Falls mehrere Bereiche die vorstehend beschriebenen besonderen Eigenschaften hinsichtlich besonders hoher Glätte und hoher Härte benötigen, wird entsprechend in den verschiedenen Bereichen jeweils der Walz- oder Rollvorgang ausgeführt. Dabei kann der Walz-oder Rollvorgang mit einer einzigen Walze oder Rolle oder auch mit einer Anordnung von mehreren Walzen oder Rollen durchgeführt werden. Auch besteht die Möglichkeit, den Walz- oder Rollvorgang in einem einzigen Überlauf oder auch in mehreren aufeinanderfolgenden Überläufen durchzuführen. Die Ausführung des Verfahrens kann dabei z.B. auf einer an sich bekannten Drückmaschine erfolgen.

Eine thermische und/oder chemische Nachbehandlung der Schaltwelle, insbesondere zur Erhöhung der Oberflächenhärte, ist nach dem erfindungsgemäßen Walzen oder Rollen im Oberflächenbereich 10 nicht mehr erforderlich.

Neben der hohen Glätte des Oberflächenbereichs 10 erhält dieser durch den Walz- oder Rollvorgang auch eine besonders genaue und eng tolerierte Bemaßung seines Außendurchmessers, was ebenfalls günstig für eine gute und dauerhafte Abdichtung im Zusammenwirken des Oberflächenbereichs 10 mit der oben erwähnten Dichtung im Schaltdekkel ist. Da der Kopfteil 12 der Schaltwelle 1 im Oberflächenbereich 10 besonders glatt ist, übt der Oberflächenbereich 10 praktisch keine verschleißende Wirkung bei seiner Bewegung relativ zur Dichtung auf diese aus. Umgekehrt führt die Dichtung nicht zu einem nennenswerten Verschleiß des Kopfteils 12 im Oberflächenbereich 10, weil dieser durch den Walz- oder Rollvorgang gehärtet ist. Damit bleibt die gute Abdichtung der Schaltwelle 1 in deren Oberflächenbereich 10 auch auf lange Zeit sicher und zuverlässig erhalten.

Der Bearbeitungsaufwand wird durch den Walz- oder Rollvorgang nur wenig erhöht und der Walz- oder Rollvorgang kann problemlos in einen automatischen Fertigungsablauf der Schaltwelle integriert werden. Die erzielbare höhere Qualität der Schaltwelle wiegt dabei den zusätzlichen Aufwand für die Ausführung des Walz- oder Rollvorganges mehr als auf.

## Patentansprüche

1. Verfahren zur Bearbeitung einer Schaltwelle (1) für ein Schaltgetriebe, insbesondere eines Kraftfahrzeuges, wobei die Schaltwelle (1) in mindestens einem Oberflächenbereich (10) zur Bildung eines Dicht-oder Verbindungsbereichs mit möglichst glatter Oberfläche bearbeitet wird,
**dadurch gekennzeichnet ,**
**daß** das Bearbeiten zur Bildung des/jedes Oberflächenbereichs (10) mit möglichst glatter Oberfläche durch mindestens einen Walz- oder Rollvorgang erfolgt oder mindestens einen Walz- oder Rollvorgang umfaßt.

2. Verfahren nach Anspruch 1, **dadurch gekennzeichnet, daß** durch den Walz- oder Rollvorgang die Oberfläche der Schaltwelle (1) in dem/jedem Oberflächenbereich (10) nachbearbeitungsfrei auf einen eng tolerierten vorgebbaren Durchmesser gebracht und gleichzeitig verfestigt wird.

3. Verfahren nach Anspruch 1 oder 2, **dadurch gekennzeichnet, daß** in dem/jedem Oberflächenbereich (10) der Schaltwelle (1) der Außenumfang der Schaltwelle (1) gewalzt oder gerollt wird.

4. Verfahren nach Anspruch 1, 2 oder 3, **dadurch gekennzeichnet, daß** in dem/jedem Oberflächenbereich (10) der Schaltwelle (1) der Innenumfang der Schaltwelle (1) gewalzt oder gerollt wird.

5. Verfahren nach einem der Ansprüche 1 bis 4, **dadurch gekennzeichnet, daß** der Walz- oder Rollvorgang mit einer einzigen Walze oder Rolle durchgeführt wird.

6. Verfahren nach einem der Ansprüche 1 bis 4, **dadurch gekennzeichnet, daß** der Walz- oder Rollvorgang mit mehreren Walzen oder Rollen durchgeführt wird.

7. Verfahren nach Anspruch 6, **dadurch gekennzeichnet, daß** die mehreren Walzen oder Rollen nacheinander zum Einsatz gebracht werden.

8. Verfahren nach Anspruch 6, **dadurch gekennzeichnet, daß** die mehreren Walzen oder Rollen gleichzeitig zum Einsatz gebracht werden.

9. Verfahren nach einem der Ansprüche 5 bis 8, **dadurch gekennzeichnet, daß** mit der/jeder Walze oder Rolle ein einziger Walzen- oder Rollenüberlauf über den/jeden Oberflächenbereich (10) der Schaltwelle durchgeführt wird.

10. Verfahren nach einem der Ansprüche 5 bis 8, **dadurch gekennzeichnet, daß** mit der/jeder Walze oder Rolle mehrere Walzen- oder Rollenüberläufe über den/jeden Oberflächenbereich (10) der Schaltwelle (1) durchgeführt werden.
